# EUROPÄISCHE PATENTSCHRIFT

(11) **EP 4 048 615 B1**
(45) Veröffentlichungstag und Bekanntmachung des Hinweises auf die Patenterteilung: **10.07.2024**
(21) Anmeldenummer: 20745180.8
(22) Anmeldetag: 22.07.2020
(51) Int. Cl.: B65G 67/20, B65G 67/08, B66F 9/06

(54) **VERLADESYSTEM ZUM BELADEN UND ENTLADEN VON LKW MIT PALETTEN IN QUERRICHTUNG**
LOADING DEVICE FOR LOADING AND UNLOADING TRUCKS WITH PALETTES IN THE TRANSVERSE DIRECTION
DISPOSITIF DE CHARGEMENT POUR CHARGER ET DÉCHARGER DES CAMIONS AU MOYEN DE PALETTES EN DIRECTION TRANSVERSALE

(30) Priorität: 25.10.2019 DE 202019106718 U; 17.12.2019 DE 102019134787
(43) Veröffentlichungstag der Anmeldung: 31.08.2022
(73) Patentinhaber: TRAPO GmbH, 48712 Gescher (DE)
(72) Erfinder: MÖLLMANN, Erik, 46414 Rhede (DE); NIEHAVES, Tobias, 46395 Bocholt (DE); KUGEL, Volker, 59269 Beckum (DE); KURTENBACH, Stefan, 46514 Schermbeck (DE); PARIS, Jascha, 48151 Münster (DE)
(74) Vertreter: Lenzing Gerber Stute
(86) Internationale Anmeldenummer: PCT/EP2020/070710
(87) Internationale Veröffentlichungsnummer: WO 2021/078418

(56) Entgegenhaltungen:
- EP-A1- 2 354 004
- WO-A1-2019/145403
- DE-A1- 102008 039 764
- DE-A1- 19 539 563
- DE-A1- 2 610 070
- JP-A- 2012 053 838
- JP-A- 2018 043 879
- JP-A- S6 031 445
- US-A- 4 508 484
- US-A- 4 941 794
- US-A1- 2005 053 451

## Beschreibung

Die vorliegende Erfindung betrifft ein Verladesystem zum Beladen und Entladen von Laderäumen von Lkw mit den Merkmalen des Oberbegriffs des Anspruchs 1.

In der Logistik wird zur Verkürzung der Standzeiten von Lkw beim Be- und Entladen angestrebt, auf Paletten befindliches Transportgut möglichst schnell aus einem Lager in den Laderaum des Lkw zu befördern. Unter Lkw soll im vorliegenden Zusammenhang der Laderaum eines Lastkraftwagens verstanden werden, der beispielsweise als Auflieger eines Sattelschleppers, als Absetzbrücke oder als Container ausgebildet sein kann. Lastkraftwagen werden zu Beladen und Entladen üblicherweise rückwärts mit der rückwärtigen Öffnung des Laderaums an eine Rampe herangefahren, an der dann Paletten bereitgestellt und in den Laderaum befördert werden.

Eine Möglichkeit zur Beladung besteht darin, Paletten einzeln mit Hubwagen oder Gabelstaplern in den Lkw zu befördern. Dabei werden rechteckige Paletten mit einheitlichen Abmessungen, beispielsweise Paletten, deren Schmalseiten etwa 0,8 m lang sind und deren Langseiten etwa 1,2 m lang sind, entweder längs oder quer nebeneinander abgestellt. Bei sogenannten Europaletten können drei Paletten in Längsrichtung, also mit den Schmalseiten in Fahrtrichtung des Lkw, oder zwei Paletten in Querrichtung, also mit den Langseiten in Fahrtrichtung des Lkw, nebeneinander abgestellt werden.

Aus dem deutschen Patent DE 3709835 C2 ist eine Be- und Entladestation für Lastkraftwagen und Container bekannt, bei der Paletten jeweils in Reihen zu drei Paletten nebeneinander auf einen den Abmessungen des Laderaumbodens entsprechenden Kettenförderer gestellt werden, bis die gesamte Ladung des Lkw auf dem Kettenförderer bereitgestellt ist. Sodann wird der Kettenförderer ganz in den Laderaum hineingefahren, wobei er sich auf dem Boden des Lkw abstützt. Der Kettenförderer wird dann in Betrieb gesetzt, um die Ladung in Fahrtrichtung des Lkw nach vorne zu bewegen und dabei die jeweils vordere Reihe von Paletten abzusetzen. Simultan wird der Kettenförderer rückwärts aus dem Laderaum heraus bewegt, und zwar mit derselben Geschwindigkeit, mit der die Paletten auf dem Kettenförderer vorwärts bewegt werden. Dadurch bewegen sich die Paletten im Wesentlichen nicht gegenüber dem Laderaum und werden eine Reihe nach der anderen dort abgesetzt, solange bis der Kettenförderer ganz aus dem Laderaum herausgefahren ist und die letzte Reihe von Paletten auf dem Boden des Laderaums abgestellt wurde. Bei dieser Anlage wird die gesamte Ladung des Lkw auf dem Kettenförderer bereitgestellt, bevor der Ladevorgang beginnt. Entsprechend ist der Platzbedarf dieser Anlage an der Rampe des Logistiklagers relativ groß und das Beladen des Kettenförderers vor dem Beginn des Ladevorgangs in den Laderaum des Lkw ist zeitaufwändig, da das Beladen des Kettenförderers abgeschlossen sein muss, bevor die Paletten in den Laderaum befördert werden können. DE 10 2008 039764 A1 offenbart ein Verladesystem gemäß dem Oberbegriff des Anspruchs 1.

Aus der europäischen Patentanmeldung mit der Veröffentlichungsnummer EP 1 946 963 A1 ist ein Auflieger eines Lkw bekannt, der am Boden seines Laderaums mit parallel in Längsrichtung des Aufliegers angeordneten Kettenförderern ausgestattet ist. Dabei sind die Kettenförderer so angeordnet, dass insgesamt drei Paletten nebeneinander auf den Förderern aufstehen können. Zum Beladen werden jeweils drei Paletten nebeneinander hinten auf den Boden des Laderaums aufgesetzt und dann durch den im Auflieger eingebauten Kettenförderer nach vorne befördert, bis der gesamte Laderaum gefüllt ist. Zum Entladen können die Paletten dann wieder mithilfe des Kettenförderers nach hinten zur Öffnung des Laderaums transportiert und dort mit einem Gabelstapler abgenommen werden. Für dieses System ist es erforderlich, den jeweiligen Auflieger mit einem eigenen Kettenförderer auszustatten, der sich über die gesamte Länge des Laderaums erstreckt und einen eigenen Antrieb aufweist. Das System ist entsprechend aufwändig.

Es ist deshalb Aufgabe der vorliegenden Erfindung, ein System zum Beladen und Entladen eines Laderaums eines Lastkraftwagens zu schaffen, das flexibler in der Handhabung ist, das ohne Umbauten des Laderaums realisiert werden kann und das im Rampenbereich des Logistiklagers einen geringeren Platzbedarf aufweist.

Diese Aufgabe wird von einem System mit den Merkmalen des Anspruchs 1 gelöst.

Weil bei einem Verladesystem zum Beladen und Entladen von Laderäumen von Lkw, mit einer Anordnung von Förderern, die parallel zueinander ausgerichtet sind und so angeordnet sind, dass Standardpaletten auf den Förderern in einer Förderrichtung hin und her bewegt werden können, weiter ein autonomes selbstfahrendes Förderfahrzeug mit wenigstens einem lenkbaren Rad als Komponente des Verladesystems vorgesehen ist, und die Förderer in einer Höhe über einem Boden so angeordnet sind, dass unterhalb der Förderer das Förderfahrzeug mit vertikal verfahrbaren Palettengabeleinheiten positionierbar ist, können auf den Förderern stehende Paletten mittels der Palettengabeleinheiten angehoben werden und in den Laderaum eines bereitstehenden Lkw gefahren werden.

Standardpaletten sind an ihrer Unterseite so ausgestaltet, dass unterhalb der lasttragenden Plattform insgesamt neun quaderförmige Blöcke angeordnet sind, jeweils drei an jeder Seite und drei in der Mitte. Die jeweils drei Blöcke sind unten mit drei Leisten in Längsrichtung der Palette verbunden. In Längsrichtung ergeben sich dadurch unten offene Freiräume, in die Palettengabeln von unten eingreifen können. In Querrichtung der Palette gesehen begrenzen die Leisten die sich zwischen den Blöcken ergebenden Öffnungen nach unten, so dass Palettengabeln in diese Öffnungen nicht von unten, sondern nur von der Seite her eingeführt werden können. Vorzugsweise sind die Förderer deshalb so lang, dass sie in Förderrichtung mindestens um eine Palettenbreite, also mindestens 0,8 m, über die freien Enden der Palettengabeleinheiten hinausstehen, wenn das Förderfahrzeug sich in einer Ruhestellung unterhalb der Förderer befindet. So können auch Paletten aufgenommen werden, bei denen die Palettengabeln von der Seite her in rundum geschlossene Öffnungen eingeführt werden müssen, um die Paletten auf einen ebenen Boden absetzen zu können.

Wenn das Förderfahrzeug wenigstens zwei Palettengabeleinheiten mit jeweils zwei parallelen und beabstandeten Palettengabeln aufweist, können jeweils zwei in Querrichtung ausgerichtete Paletten in einer Reihe nebeneinander gleichzeitig aufgenommen und transportiert werden.

Vorzugsweise weist das Verladesystem insgesamt sechs parallele, als Kettenförderer ausgebildete Förderer in drei Paaren auf, von denen jeweils ein Paar von benachbarten Förderern einen Abstand von 0,5 m bis 0,7 m voneinander aufweist. Diese Anordnung von Förderern kann sowohl zwei quer ausgerichtete Paletten als auch drei längs ausgerichtete Paletten tragen und fördern.

In einer vereinfachten Ausführungsform, die nur quer ausgerichtete Paletten verarbeiten kann, weist das Verladesystem insgesamt vier parallele, als Kettenförderer ausgebildete Förderer in zwei Paaren auf, von denen jeweils ein Paar von benachbarten Förderern einen Abstand von 0,8 m bis 1,2 m voneinander aufweist.

Wenn in Förderrichtung stromaufwärts vor den Förderern ein Aufgabebereich vorgesehen ist, kann dort eine Reihe von Paletten abgestellt und falls erforderlich ausgerichtet werden, bevor diese Paletten auf den Kettenförderer übergeben werden. Der Aufgabebereich weist vorzugsweise einen Rollenförderer mit Rollen mit quer zu der Förderrichtung ausgerichteten Drehachsen auf. Dazu ist es vorteilhaft, wenn die Rollen zumindest zum Teil bremsbar und antreibbar sind. Außerdem ist es vorteilhaft, eine Ausrichthilfe parallel zu den Rollen anzuordnen.

In einer bevorzugten Ausführungsform ist der Rollenförderer mit quer zu der Förderrichtung arbeitenden Kettenförderern ausgestattet, die zum Umsetzen der Paletten auf dem Rollenförderer eingerichtet sind und vertikal anhebbar und absenkbar sind. So können die Paletten zusammengerückt und in Querrichtung genau auf die stromabwärts angeordneten Kettenförderer ausgerichtet werden.

Vorteilhaft sind Messsäulen mit Sensoren zur Vermessung einer nicht zu dem Verladesystem gehörenden Laderaumöffnung vorgesehen, damit Daten zur relativen Positionierung der Laderaumöffnung zu dem Verladesystem ermittelt werden können.

Weiter ist vorgesehen, dass das Förderfahrzeug auf der den Palettengabeleinheiten abgewandten Seite den Antrieb, wenigstens ein gelenktes Rad und vorzugsweise auch ein Gegengewicht trägt. Dadurch kann das Gewicht der Paletten im Betrieb ausgeglichen werden, so dass unterhalb der Palettengabeln keine Stützräder erforderlich sind und die Palettengabeln frei bis auf den Boden abgesenkt werden können.

Es ist auch vorteilhaft, wenn zumindest die inneren Palettengabeln in Horizontalrichtung quer zu der Förderrichtung verschiebbar angeordnet sind. Dann kann der Abstand der Palettengabeln an die Abstände der Öffnungen insbesondere in den Langseiten der Paletten angepasst werden.

Das Förderfahrzeug weist vorzugsweise wenigstens einen Antrieb, wenigstens eine Hubeinheit und eine Steuerung auf, die ein autonomes Fahren des Förderfahrzeugs sowie Aufnahme, Transport und Absetzen der Last ermöglichen. Dazu ist vorzugsweise das Förderfahrzeug selbst mit Sensoren zur Navigation innerhalb eines Laderaums ausgestattet.

Für einen weitgehend autonomen Betrieb ist es von Vorteil, wenn das Förderfahrzeug einen Akkumulator zur Stromversorgung des Antriebs, der Hubeinheiten und der Steuerung aufweist, der mittels einer elektrischen Kupplung oder induktiv in dem Verladesystem elektrisch aufgeladen werden kann. Das Aufladen erfolgt vorzugsweise in einer Ruhestellung unterhalb der Kettenförderer.

Eine besonders hohe Betriebssicherheit mit verringerter Kollisionsgefahr zwischen den Paletten und dem Förderfahrzeug wird erzielt, wenn das Förderfahrzeug in einer Ruhe- oder Bereitschaftsstellung mit abgesenkten Palettengabeleinheiten nicht nach oben über die Kettenförderer hinausragt.

In einer bevorzugten Ausführungsform ist das Verladesystem auf einer Grundplatte montiert, die einerseits die genaue Ausrichtung der Komponenten zueinander gewährleistet, die andererseits aber auch selbst auf Rollen oder auf einem Schienensystem quer zu der Förderrichtung verfahrbar gelagert sein kann. Dadurch ist es möglich, das Verladesystem innerhalb eines Logistikgebäudes parallel zu der Rampe zu verschiedenen benachbarten Toren zu verfahren.

Nachfolgend wird ein Ausführungsbeispiel der Erfindung anhand der Zeichnung näher beschrieben. Es zeigen:
- Figur 1:: ein selbstfahrendes Förderfahrzeug für ein Verladesystem in einer Seitenansicht mit abgesenkten Palettengabeleinheiten;
- Figur 2:: das Förderfahrzeug aus Figur 1 mit angehobenen Palettengabeleinheiten;
- Figur 3:: das Verladesystem mit dem Förderfahrzeug in der Ruheposition in einer perspektivischen Darstellung;
- Figur 4:: das Verladesystem aus Figur 3 mit einer aufgesetzten Reihe von zwei Paletten und einem mit der Laderaumöffnung an das Verladesystem herangefahrenen Auflieger;
- Figur 5:: das Verladesystem aus Figur 4, bei dem die Reihe von Paletten in Richtung auf den Auflieger verfahren wurde;
- Figur 6:: das Verladesystem aus Figur 4 und Figur 5, bei dem die Paletten von dem Förderfahrzeug angehoben und von den Kettenförderern abgenommen sowie in Richtung auf die Laderaumöffnung verfahren wurden; sowie
- Figur 7:: das Verladesystem aus Fig. 4 bis 6, bei dem das Förderfahrzeug mit den Paletten ganz in den Laderaum des Aufliegers hineingefahren ist und die Paletten dort abgesetzt hat.

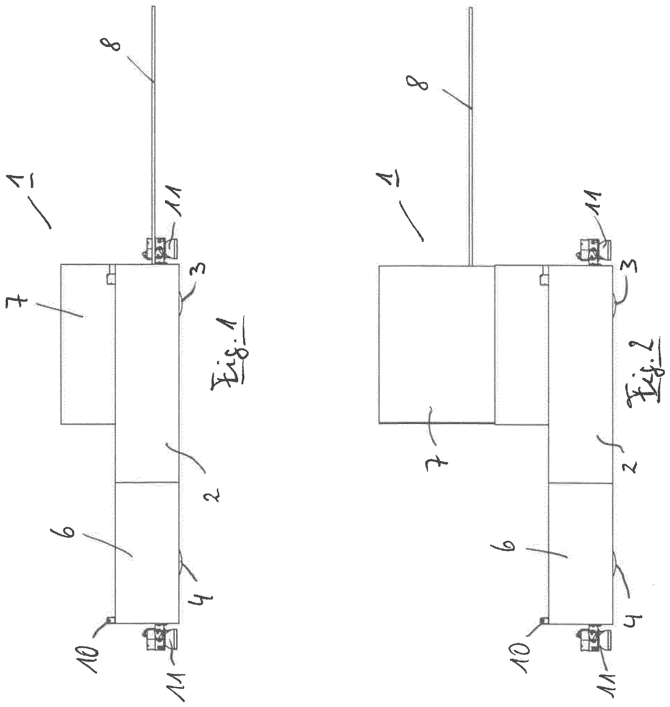

Die Figur 1 zeigt ein selbstfahrendes Förderfahrzeug 1 als Teil des hier zu beschreibenden Verladesystems in einer Seitenansicht. Das Förderfahrzeug 1 weist ein Fahrgestell 2 mit Stützrollen 3 und gelenkten Antriebsrädern 4 auf. Die gelenkten Antriebsräder 4 sind an einem Antriebsblock 6 angeordnet. Der Antriebsblock 6 beinhaltet die hier nicht dargestellten Elemente zur Steuerung, zum Antrieb und Batterien zur Energiespeicherung für den Betrieb des Förderfahrzeug 1 und, falls erforderlich, stabilisierende Gewichte. Außerdem trägt der Antriebsblock 6 eine Anzahl von Hubeinheiten 7, die mit Palettengabeleinheiten 8 verbunden sind und die so eingerichtet sind, dass sie in Abhängigkeit von einer Steuerung die Palettengabeleinheiten 8 anheben und absenken können, und zwar mitsamt einer darauf eventuell befindlichen Last. Die Palettengabeleinheiten 8 sind in der Figur 1 in abgesenktem Zustand dargestellt. Die Höhe der Oberseite der Palettengabeleinheiten 8 über der Aufstandsfläche entspricht dabei maximal der lichten Höhe unter einer Standardpalette für die Logistik. Die Stützräder 3 sind unterhalb der Hubeinheiten 7 angeordnet, und zwar möglichst weit in Richtung der Palettengabeleinheiten 8.

Das Förderfahrzeug 1 ist außerdem mit Sensoren 10 und zusätzlichen Sicherheitssensoren 11 ausgestattet, die für die selbstständige Navigation des Förderfahrzeugs 1 die nötigen Informationen liefern. Weiter ist eine Kupplung an der in Fahrtrichtung hinteren Seite vorgesehen, die zur Aufladung des Energiespeichers dient, wenn das Förderfahrzeug 1 in der Ruheposition an dem Verladesystem angedockt ist.

In der Figur 2 ist das Förderfahrzeug 1 in einer Ansicht entsprechend Figur 1 dargestellt. In der Figur 2 sind die Hubeinheiten 7 mitsamt den daran befestigten Palettengabeleinheiten 8 angehoben.

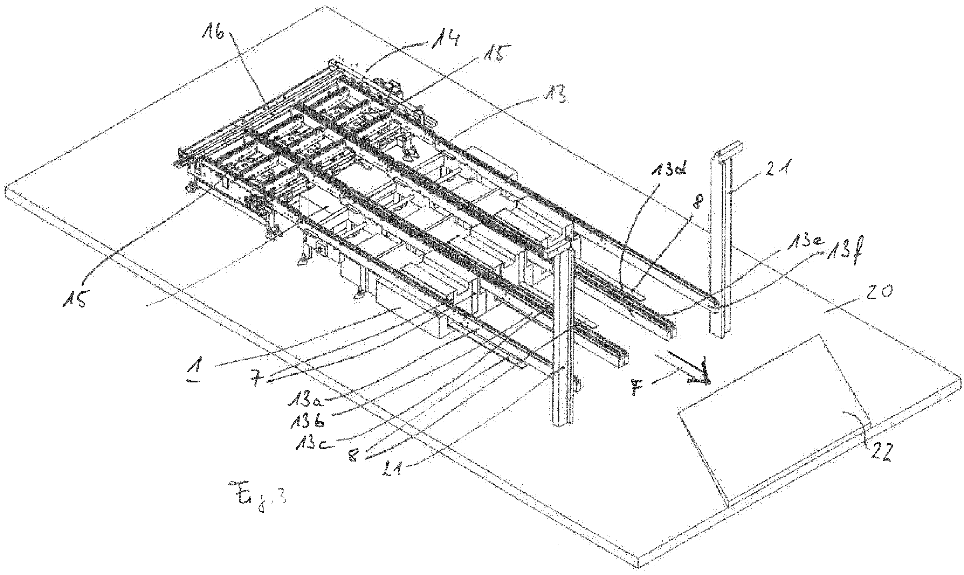

In der Figur 3 ist ein Ausführungsbeispiel eines Verladesystems im Ruhezustand perspektivisch dargestellt. Das Verladesystem umfasst das Förderfahrzeug 1 und eine Kettenfördereranordnung 13 mit einer Anzahl von Kettenförderern 13a bis 13f. Eine Förderrichtung F ist in der Figur 3 mit einem Pfeil gekennzeichnet. Zum Beladen von Lkw wird in Förderrichtung F gefördert, beim Entladen eines Lkw wird die Ladung entgegen der Förderrichtung F befördert.

Die Kettenfördereranordnung 13 weist einen Aufgabebereich 14 auf, in dem eine rückwärtige Ausrichthilfe 16 quer zu der Förderrichtung F vorgesehen, die vorzugsweise im Betrieb angehoben und abgesenkt werden kann. Weiter sind im Aufgabebereich 14 mindestens zwei, vorzugsweise jedoch drei vertikal bewegliche Kettenförderer 15 integriert, um den Abstand zwischen den Paletten regulieren zu können und eine zweite Förderrichtung quer zur Förderrichtung F zu realisieren.

In Förderrichtung F anschließend an den Aufgabebereich 14 sind die Kettenförderer 13a bis 13f angeordnet. Deren Ausrichtung ist so gewählt, dass sie parallel zu der Förderrichtung F in beiden Richtungen antreibbar sind. Im Detail sind insgesamt sechs einzelne Förderketten 13a bis 13f vorgesehen, von denen die Förderketten 13a und 13b einen Abstand zwischen 0,5 m und 0,7 m voneinander aufweisen, so dass die gesamte Breite der beiden Kettenförderer der Breite einer Standardpalette entspricht. Die Förderkette 13c ist unmittelbar neben der Förderkette 13b angeordnet. Der Abstand der Förderketten 13c und 13d voneinander entspricht wieder der Breite einer Standardpalette. Die Förderkette 13e ist unmittelbar neben der Förderkette 13d angeordnet. Der Abstand der Förderketten 13e und 13f schließlich entspricht wieder der Breite einer Standardpalette. Insgesamt können also drei Paletten in Längsrichtung auf den Kettenförderer 13 aufgesetzt und dort parallel gleichzeitig transportiert werden. Die so angeordneten Förderketten erlauben es aber auch, zwei in Querrichtung aufgegebene Paletten zu tragen.

Das Förderfahrzeug 1 ist in der Ruheposition unterhalb des Kettenförderers 13 dargestellt. In dieser perspektivischen Darstellung ist ersichtlich, dass das Förderfahrzeug 1 aus insgesamt drei Modulen besteht, die jeweils eine eigene Palettengabeleinheit 8 sowie zwei der Palettengabeleinheit 8 zugeordnete Hubmodule 7 aufweisen. Nicht alle Palettengabeln sind hier dargestellt.

Das Verladesystem ist auf einem Boden, hier in Form einer Grundplatte 20 angeordnet, die rechts und links (in Richtung der Förderrichtung F gesehen) jeweils eine Messsäule 21 trägt. Die Messsäulen 21 sind mit einer Anzahl von nicht näher dargestellten Sensoren versehen und dazu eingerichtet, die genaue Position der Laderaumöffnung auszumessen, sobald ein Lkw an die Rampe herangefahren ist. Weiter trägt die Grundplatte 20 eine Klappe 22, die im Betrieb in Förderrichtung F heruntergeklappt werden kann, sobald eine Laderaumöffnung bereitsteht. Die Klappe 22 überbrückt einen Abstand und gegebenenfalls eine Höhendifferenz zwischen der Laderaumöffnung und der Grundplatte 20.

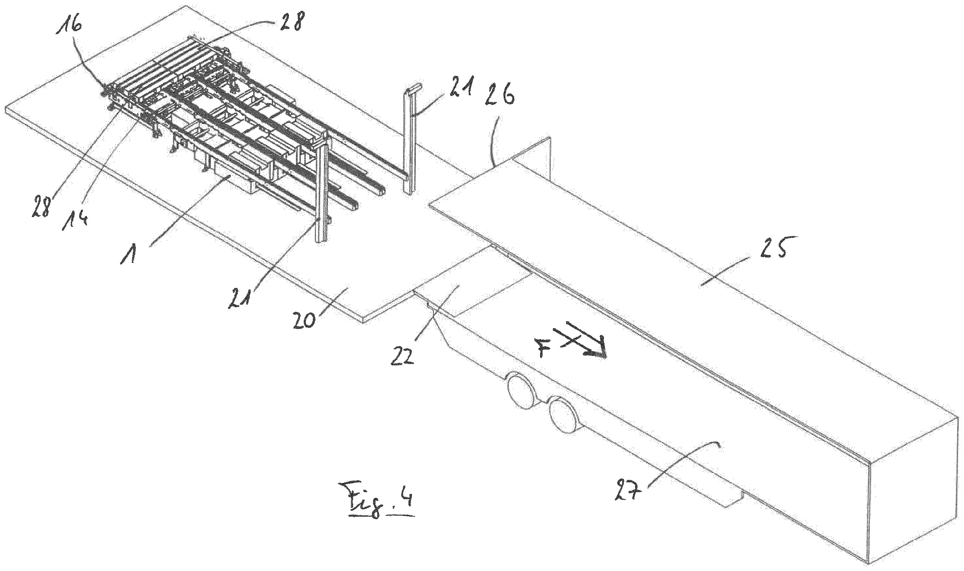

Die Figur 4 zeigt die oben bereits angedeutete Situation, in der ein Auflieger 25 eines Lkw mit einer Laderaumöffnung 26 an eine (nicht dargestellte) Rampe eines Lagergebäudes herangefahren wurde. Die Klappe 22 ist heruntergeklappt und liegt auf einem Laderaumboden 27 des Aufliegers 25 auf. Im Unterschied zu Fig. 3 wurde mit dem Beladevorgang bereits begonnen. Dazu wurden zwei Paletten 28 auf den Aufgabebereich 14 parallel nebeneinander aufgesetzt. Zur Ausrichtung in der Förderrichtung F können die Paletten 28 rückwärts gegen die Ausrichthilfe 16 gefahren werden. Die beiden Paletten 28 bilden eine Reihe, die in den Laderaum des Aufliegers 25 befördert werden soll.

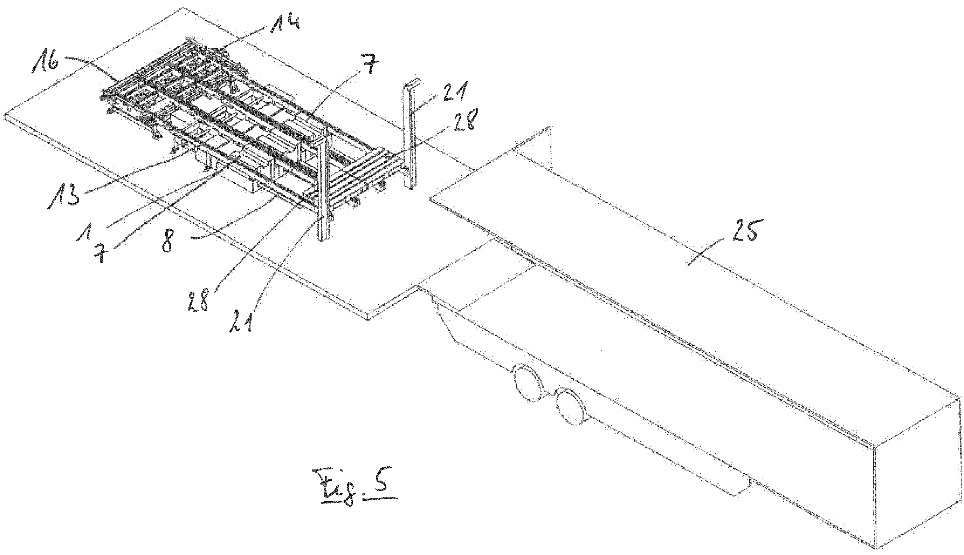

Der nächste Schritt ist in Figur 5 dargestellt. Hier sind die Paletten 28 zunächst von dem Aufgabebereich 14 in Förderrichtung F nach vorne auf dem Kettenförderer 13 gefördert worden, auf dem jeweils eine Palette 28 in Querausrichtung wie oben beschrieben auf insgesamt drei beabstandeten Kettenförderern steht. Der Kettenförderer 13 wiederum hat die Paletten 28 in Förderrichtung F so weit befördert, dass sie über die Palettengabeleinheiten 8 des Förderfahrzeugs 1 hinaus bewegt wurden.

Die Positionierung der Paletten 28 auf dem Kettenförderer 13 erlaubt es nun, die Palettengabeleinheiten 8 des Förderfahrzeugs 1 mittels der Hubeinheiten 7 anzuheben. Die Palettengabeleinheiten 8 sind quer zu der Förderrichtung F einstellbar und so eingestellt, dass sie in die längsseitigen Öffnungen an der Unterseite der Paletten 28 passen und dementsprechend auch zwischen die jeweils beanstandeten Kettenförderer, auf denen die Paletten 28 stehen.

Das Förderfahrzeug 1 kann also die Palettengabeln 8 in die seitlichen Öffnungen der Paletten 28 einführen und die beiden Paletten 28 mittels der Palettengabeleinheiten 8 von den Kettenförderern 13a bis 13f abheben. Es trägt dann die Last der beiden nebeneinander stehenden Paletten 28, die hier der besseren Übersichtlichkeit wegen ohne darauf befindliches Transportgut dargestellt sind.

Bevor das Förderfahrzeug 1 nun mit den von den Palettengabeleinheiten 8 getragenen Paletten 28 in Förderrichtung F autonom losfährt, wird von den Sensoren der Messsäulen 21 die Laderaumöffnung 26 vermessen und die genaue Position in Querrichtung und in Vertikalrichtung ermittelt. Diese Information wird an eine nicht dargestellte Steuerung des Förderfahrzeugs 1 übermittelt, das dann die Laderaumöffnung 26 gezielt ansteuern kann. Dazu sind die in Figur 1 dargestellten lenkbaren Antriebsräder 4 vorgesehen, die das Förderfahrzeug 1 präzise in die Laderaumöffnung 26 steuern können.

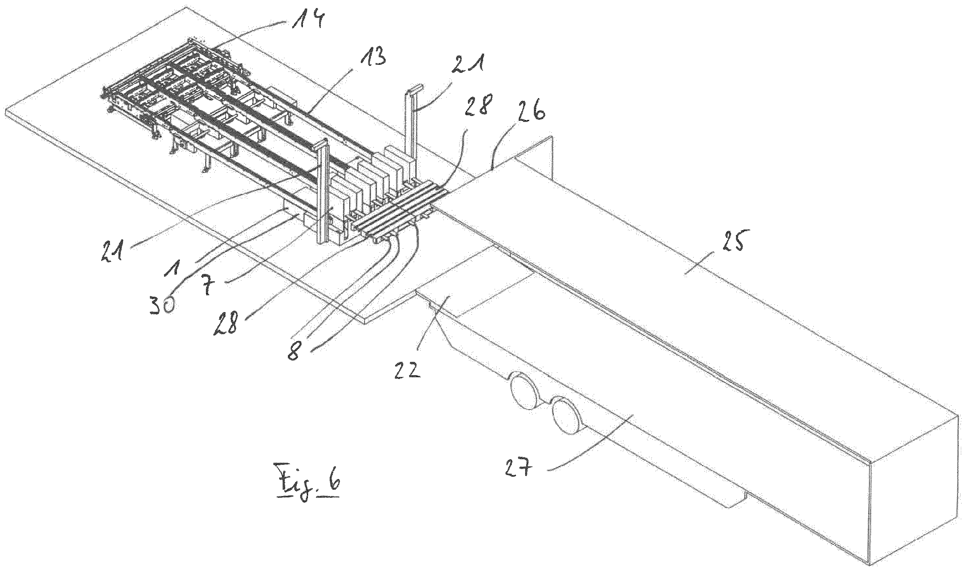

In der Figur 6 ist veranschaulicht, wie das Förderfahrzeug 1 mit den von den Kettenförderer 13 abgenommenen Paletten 28 in Richtung auf die Laderaumöffnung 26 verfährt. Die Palettengabeleinheiten 8 sind hier noch angehoben. Es ist ersichtlich, dass die insgesamt sechs Palettengabeln 8 in Querrichtung so eingestellt wurden, dass je zwei Palettengabeln 8 in die beiden äußeren Öffnungen der Paletten 28 eingeführt wurden, während in die beiden inneren Öffnungen nur je eine Palettengabel 8 eingreift.

Vor dem Einfahren in die Laderaumöffnung 26 werden die Palettengabeleinheiten 8 abgesenkt, sodass auch Paletten, die bis zur vorgesehenen maximalen Höhe beladen sind, sicher in die Laderaumöffnung 26 eingefahren werden können, ohne an der Oberkante anzustoßen. Dabei werden die Palettengabeleinheiten 8 soweit abgesenkt, dass die Paletten noch nicht mit der Grundplatte 20, der Klappe 22 oder dem Laderaumboden 27 in Berührung kommen. Zur Positionierung und Navigation innerhalb des Laderaums sind die Sensoren 10 durch die Steuerung auslesbar. Im Allgemeinen wird das Förderfahrzeug 1 so navigieren, dass es mittig auf dem Laderaumboden 27 zwischen den Seitenwänden des Aufliegers 25 fährt.

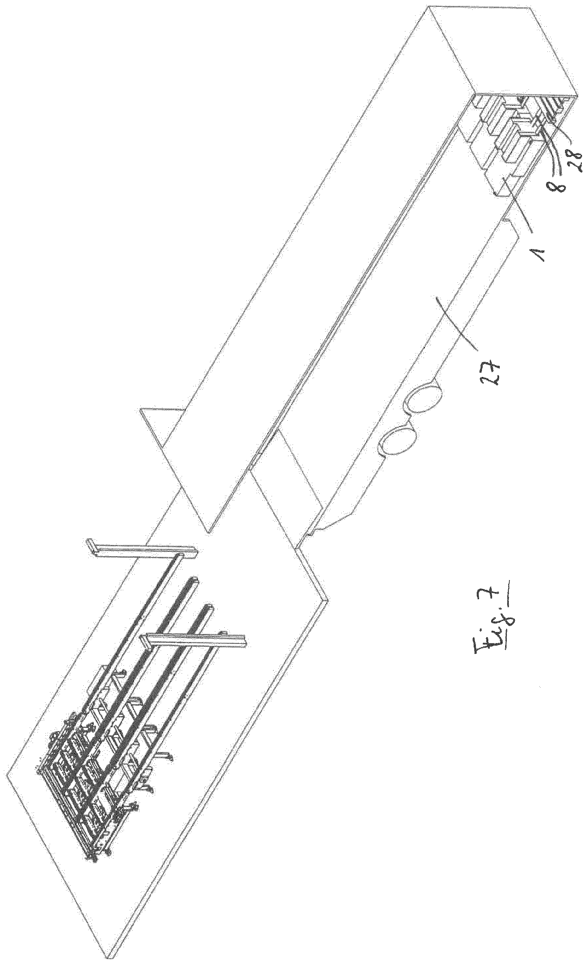

Mit abgesenkten Palettengabeleinheiten 8 kann nun das Förderfahrzeug 1 mitsamt den Paletten 28 in den Auflieger 25 hineinfahren, und zwar bis zu der in Figur 7 dargestellten Endposition, in der die Paletten 28 dann zum weiteren Transport abgestellt werden, indem die Palettengabeleinheiten 8 so weit abgesenkt werden, dass die Paletten 28 dann auf dem Laderaumboden 27 aufstehen und die Palettengabeln 8 aus den Öffnungen herausgezogen werden können, wenn das Förderfahrzeug 1 rückwärts fährt. Das Förderfahrzeug 1 kann ohne die Paletten 28 selbsttätig entgegen der Förderrichtung F rückwärts in die Ausgangslage zurückfahren.

Sobald die Paletten 28 von dem Aufgabebereich 14 auf den Kettenförderer 13 übergeben worden sind, also etwa ab der in Figur 5 veranschaulichten Stellung, können weitere Paletten auf dem Aufgabebereich 14 abgesetzt werden, bis eine neue Reihe von zwei Paletten gebildet ist. Mit dieser neuen Reihe von Paletten geht dann der zu den Figuren 4 bis 7 beschriebene Verladevorgang weiter, wobei das Förderfahrzeug 1 die neue Reihe Paletten auf dem Laderaumboden 27 des Aufliegers 25 in der Förderrichtung F unmittelbar hinter die dort bereits befindlichen Reihen von Paletten 28 stellt. Dies erfolgt so lange, bis alle Paletten abgearbeitet oder der Laderaum des Aufliegers 25 vollständig gefüllt ist.

Das Entladen eines beladenen Aufliegers 25 erfolgt sinngemäß in umgekehrter Reihenfolge. Das Förderfahrzeug 1 fährt dazu in den gefüllten Laderaum des Aufliegers 25, hebt jeweils eine Reihe von Paletten an und setzt diese auf dem Kettenförderer 13 ab, von dem aus dann die Paletten entgegen der Förderrichtung F auf den Aufgabebereich 14 verfahren werden, wo sie von einem Gabelstapler abgenommen werden können.

Das Förderfahrzeug 1 kann über eine entsprechende elektrische Kupplung oder eine induktive Ladevorrichtung in der Ruhestellung, die in Figur 3 veranschaulicht ist, geladen werden, und zwar zwischen den jeweiligen Fahrten und insbesondere auch bei Wartezeiten zwischen zwei Verladevorgängen.

Mit dem neuen Verladesystem können in der beschriebenen Weise Reihen von zwei Paletten in Querrichtung oder drei Paletten in Längsrichtung verfahren werden, wobei bei einem Wechsel der Ausrichtung der Paletten lediglich die Positionen der zweiten und der fünften Palettengabel passend eingestellt werden müssen, falls dies je nach Bauart der Paletten überhaupt erforderlich ist.

Es ist ersichtlich, dass das neue Verladesystem keine neuen Einbauten in dem Auflieger des Lkw oder in entsprechenden Wechselbrücken oder Containern erfordert, sondern auch mit Standardfahrzeugen genutzt werden kann. Weiter ist ersichtlich, dass der Platzbedarf im Lagergebäude im Rampenbereich deutlich geringer ist als bei Systemen, bei denen die gesamte Ladung von üblicherweise 16 x 2 Paletten in Querrichtung bzw. 11 × 3 Paletten in Längsrichtung auf einem Fördersystem positioniert und dann insgesamt in den Laderaum befördert werden muss.

## Patentansprüche

1. Verladesystem zum Beladen und Entladen von Laderäumen von Lkw, mit einer Anordnung von Förderern (13), die parallel zueinander ausgerichtet sind und so angeordnet sind, dass Standardpaletten auf den Förderern in einer Förderrichtung (F) hin und her bewegt werden können, **dadurch gekennzeichnet, dass** ein autonomes Förderfahrzeug (1) mit wenigstens einem lenkbaren Rad als Komponente des Verladesystems vorgesehen ist, und dass die Förderer (13) so in einer Höhe über einem Boden angeordnet sind, dass unterhalb der Förderer das Förderfahrzeug (1) mit vertikal verfahrbaren Palettengabeleinheiten (8) positionierbar ist.

2. Verladesystem nach Anspruch 1, **dadurch gekennzeichnet, dass** das Förderfahrzeug wenigstens zwei Palettengabeleinheiten (8) mit jeweils zwei parallelen und beabstandeten Palettengabeln aufweist.

3. Verladesystem nach Anspruch 1 oder 2, **dadurch gekennzeichnet, dass** die Förderer so ausgebildet sind, dass sie in Förderrichtung mindestens um mindestens 0,8 m über die freien Enden der Palettengabeleinheiten hinausstehen, wenn das Förderfahrzeug sich in einer Ruhestellung unterhalb der Förderer befindet.

4. Verladesystem nach einem der vorhergehenden Ansprüche, **dadurch gekennzeichnet, dass** insgesamt sechs parallele Kettenförderer (13a bis 13f) vorgesehen sind, von denen jeweils zwei benachbarte Kettenförderer (13a und 13b; 13c und 13d; 13e und 13f) einen Abstand von 0,5m bis 0,7m voneinander aufweisen.

5. Verladesystem nach einem der vorhergehenden Ansprüche, **dadurch gekennzeichnet, dass** in Förderrichtung (F) stromaufwärts vor dem Kettenförderer (13) ein Aufgabebereich (14) vorgesehen ist, insbesondere mit einem Rollenförderer mit Rollen, deren Drehachsen quer zu der Förderrichtung (F) ausgerichtet sind.

6. Verladesystem nach Anspruch 5, **dadurch gekennzeichnet, dass** in dem Aufgabebereich (14) quer zu der Förderrichtung (F) arbeitende Kettenförderern vorgesehen sind, die zum Umsetzen der Paletten auf dem Rollenförderer (12) eingerichtet sind.

7. Verladesystem nach einem der vorhergehenden Ansprüche 5 oder 6, **dadurch gekennzeichnet, dass** die Rollen zumindest zum Teil bremsbar und antreibbar sind.

8. Verladesystem nach einem der vorhergehenden Ansprüche 5 bis 7, **dadurch gekennzeichnet, dass** eine Ausrichthilfe (16) quer zu der Förderrichtung (F) stromaufwärts des Aufgabebereichs (14) angeordnet ist.

9. Verladesystem nach einem der vorhergehenden Ansprüche, **dadurch gekennzeichnet, dass** Messsäulen (21) mit Sensoren zur Vermessung einer nicht zu dem Verladesystem gehörenden Laderaumöffnung vorgesehen sind.

10. Verladesystem nach einem der vorhergehenden Ansprüche, **dadurch gekennzeichnet, dass** das Förderfahrzeug (1) wenigstens einen Antrieb, wenigstens eine Hubeinheit und eine Steuerung (30) aufweist.

11. Verladesystem nach einem der vorhergehenden Ansprüche, **dadurch gekennzeichnet, dass** das Förderfahrzeug (1) mit Sensoren (10) zur Navigation innerhalb eines Laderaums ausgestattet ist.

12. Verladesystem nach einem der vorhergehenden Ansprüche, **dadurch gekennzeichnet, dass** das Förderfahrzeug (1) einen Akkumulator zur Stromversorgung des Antriebs, der Hubeinheiten und der Steuerung aufweist, der mittels einer elektrischen Kupplung (11) oder induktiv in dem Verladesystem elektrisch aufgeladen werden kann.

13. Verladesystem nach einem der vorhergehenden Ansprüche, **dadurch gekennzeichnet, dass** das Förderfahrzeug (1) in einer Ruhestellung unterhalb der Kettenförderer (13) nicht über die Kettenförderer (13) hinausragt.

14. Verladesystem nach einem der vorhergehenden Ansprüche 5 bis 8, **dadurch gekennzeichnet, dass** der Boden von einer Grundplatte (20) gebildet ist, auf der zumindest der Aufgabebereich (14) und der Kettenförderer (13) montiert sind.

15. Verladesystem nach Anspruch 14, **dadurch gekennzeichnet, dass** die Grundplatte (20) auf Rollen oder auf einem Schienensystem quer zu der Förderrichtung (F) verfahrbar gelagert ist.

## Claims

1. Loading system for loading and unloading loading spaces of trucks, having an arrangement of conveyors (13) which are aligned parallel to one another and are arranged such that standard pallets can be moved back and forth on the conveyors in a conveying direction (F), **characterized in that in that** an autonomous conveyor vehicle (1) with at least one steerable wheel is provided as a component of the loading system, and **in that** the conveyors (13) are arranged at a height above a floor such that the conveyor vehicle (1) with vertically movable pallet fork units (8) can be positioned below the conveyors.

2. Loading system according to claim 1, **characterized in that** the conveyor vehicle has at least two pallet fork units (8), each with two parallel and spaced pallet forks.

3. Loading system according to claim 1 or 2, **characterized in that** the conveyors are designed in such a way that they protrude in the conveying direction by at least 0.8 m beyond the free ends of the pallet fork units when the conveyor vehicle is in a rest position below the conveyors.

4. Loading system according to one of the preceding claims, **characterized in that** a total of six parallel chain conveyors (13a to 13f) are provided, of which in each case two adjacent chain conveyors (13a and 13b; 13c and 13d; 13e and 13f) are at a distance of 0.5 m to 0.7 m from one another.

5. Loading system according to one of the preceding claims, **characterized in that** a feed area (14) is provided upstream of the chain conveyor (13) in the conveying direction (F), in particular with a roller conveyor with rollers whose axes of rotation are aligned transversely to the conveying direction (F).

6. Loading system according to claim 5, **characterized in that** chain conveyors operating transversely to the conveying direction (F) are provided in the feed area (14), which are set up for displacing the pallets on the roller conveyor (12).

7. Loading system according to one of the preceding claims 5 or 6, **characterized in that** the rollers are at least partially brakable and drivable.

8. Loading system according to one of the preceding claims 5 to 7, **characterized in that** an alignment aid (16) is arranged transversely to the conveying direction (F) upstream of the feed area (14).

9. Loading system according to one of the preceding claims, **characterized in that** measuring columns (21) with sensors are provided for measuring a loading space opening not belonging to the loading system.

10. Loading system according to one of the preceding claims, **characterized in that** the conveyor vehicle (1) has at least one drive, at least one lifting unit and a control unit (30).

11. Loading system according to one of the preceding claims, **characterized in that** the conveyor vehicle (1) is equipped with sensors (10) for navigation within a loading space.

12. Loading system according to one of the preceding claims, **characterized in that** the conveyor vehicle (1) has an accumulator for supplying power to the drive, the lifting units and the control system, which can be electrically charged by means of an electric coupling (11) or inductively in the loading system.

13. Loading system according to one of the preceding claims, **characterized in that** the conveyor vehicle (1) does not project beyond the chain conveyors (13) in a rest position below the chain conveyors (13).

14. Loading system according to one of the preceding claims 5 to 8, **characterized in that** the floor is formed by a base plate (20) on which at least the feed area (14) and the chain conveyor (13) are mounted.

15. Loading system according to claim 14, **characterized in that** the base plate (20) is mounted on rollers or on a rail system so as to be movable transversely to the conveying direction (F).

## Revendications

1. Système de chargement pour charger et décharger des espaces de chargement de camions, comprenant: un agencement de transporteurs (13) qui sont alignés parallèlement les uns aux autres et sont agencés de sorte que des palettes standard puissent être avancées et reculées sur les transporteurs dans une direction de transport (F), **caractérisé en ce qu'**un véhicule de transport autonome (1), ayant au moins une roue orientable, est prévu en tant que composant du système de chargement, et **en ce que** les transporteurs (13) sont agencés à une hauteur au-dessus d'un plancher de sorte que le véhicule de transport (1), doté d'unités de fourches pour palettes mobiles verticalement (8), puisse être positionné sous les transporteurs.

2. Système de chargement selon la revendication 1, **caractérisé en ce que** le véhicule de transport présente au moins deux unités de fourches pour palettes (8) ayant chacune deux fourches pour palettes parallèles et espacées.

3. Système de chargement selon la revendication 1 ou 2, **caractérisé en ce que** les transporteurs sont conçus de sorte qu'ils font saillie au-delà des extrémités libres des unités de fourches pour palettes dans la direction de transport au moins d'au moins 0,8 m, lorsque le véhicule de transport est dans une position de repos en dessous du transporteur.

4. Système de chargement selon l'une quelconque des revendications précédentes, **caractérisé en ce qu'**un total de six transporteurs à chaîne parallèles (13a à 13f) sont prévus, parmi lesquels respectivement deux transporteurs à chaîne adjacents (13a et 13b ;13c et 13d ; 13e et 13f) présentent une distance de 0,5 m à 0,7 m entre l'un et l'autre.

5. Système de chargement selon l'une quelconque des revendications précédentes, **caractérisé en ce que** dans la direction de transport (F) en amont des transporteurs à chaîne (13) est prévue une zone de prise en charge (14), en particulier avec un transporteur à rouleaux ayant des rouleaux, dont les axes de rotation sont orientés transversalement à la direction de transport (F).

6. Système de chargement selon la revendication 5, **caractérisé en ce que** dans la zone de prise en charge (14) sont prévus des transporteurs à chaîne fonctionnant transversalement à la direction de transport (F), qui sont configurés pour positionner les palettes sur le transporteur à rouleaux (12).

7. Système de chargement selon l'une quelconque des revendications précédentes 5 ou 6, **caractérisé en ce que** les rouleaux peuvent être freinés et entraînés au moins partiellement.

8. Système de chargement selon l'une quelconque des revendications précédentes 5 à 7, **caractérisé en ce qu'**un auxiliaire d'alignement (16) est agencé transversalement à la direction de transport (F) en amont de la zone de prise en charge (14).

9. Système de chargement selon l'une quelconque des revendications précédentes, **caractérisé en ce que** des colonnes de mesure (21) sont prévues, avec des capteurs pour mesurer un espace de chargement qui n'est pas associé au système de chargement.

10. Système de chargement selon l'une quelconque des revendications précédentes, **caractérisé en ce que** le véhicule de transport (1) présente au moins un entraînement, au moins une unité de levage et un dispositif de commande (30).

11. Système de chargement selon l'une quelconque des revendications précédentes, **caractérisé en ce que** le véhicule de transport (1) est conçu avec des capteurs (10) pour la navigation dans un espace de chargement.

12. Système de chargement selon l'une quelconque des revendications précédentes, **caractérisé en ce que** le véhicule de transport (1) présente un accumulateur pour l'alimentation électrique de l'entraînement, des unités de levage et du dispositif de commande, qui peut être chargé électriquement au moyen d'un couplage électrique (11) ou par induction dans le système de chargement.

13. Système de chargement selon l'une quelconque des revendications précédentes, **caractérisé en ce que** le véhicule de transport (1), dans une position de repos sous les transporteurs à chaîne (13), ne dépasse pas des transporteurs à chaîne (13).

14. Système de chargement selon l'une quelconque des revendications précédentes 5 à 8, **caractérisé en ce que** le plancher est formé par une plaque de base (20) sur laquelle au moins la zone de prise en charge (14) et les transporteurs à chaîne (13) sont montés.

15. Système de chargement selon la revendication 14, **caractérisé en ce qu'**une plaque de base (20) est montée de manière à être mobile sur des rouleaux ou sur un système de rails transversalement à la direction de transport (F).
